# EUROPEAN PATENT SPECIFICATION

(11) **EP 3 392 955 B1**
(45) Date of publication and mention of the grant of the patent: **06.04.2022**
(21) Application number: 18167597.6
(22) Date of filing: 16.04.2018
(51) Int. Cl.: H01M 10/613

(54) **COOLING SYSTEM INCLUDING HEAT PIPES**
KÜHLUNGSSYSTEM ENTHALTEND WÄRMERÖHRE
SYSTEME DE REFRIGERATION CONTENANT DES CALODUCS.

(30) Priority: 18.04.2017 JP 2017081968
(43) Date of publication of application: 24.10.2018
(73) Proprietor: FUJIKURA LTD, Koto-ku Tokyo (JP)
(72) Inventor: RANDEEP, Singh, TOKYO, 135-8512 (JP); PHAN, Thanhlong, TOKYO, 135-8512 (JP); TAKAHASHI, Makoto, TOKYO, 135-8512 (JP); HORIUCHI, Yasuhiro, TOKYO, 135-8512 (JP)
(74) Representative: Plasseraud IP

(56) References cited:
- WO-A1-2017/000746
- US-A1- 2009 208 829
- US-A1- 2013 244 066
- US-A1- 2015 194 714
- US-A1- 2017 005 380
- Bambang Ariantara et Al: "Performance of Flat Plate Loop Heat Pipe for Thermal Managenement of Lithium-Ion Battery in Electric Vehicle Application", Applied Thermal Engineering, 1 April 2016 (2016-04-01), pages 1701-1705, XP55475877, DOI: 10.1016/j.applthermaleng.2016.01.123 Retrieved from the Internet: URL:https://waset.org/publications/1000212 8/performance-of-flat-plate-loop-heat-pipe -for-thermal-management-of-lithium-ion-bat tery-in-electric-vehicle-application [retrieved on 2018-05-16]
- Andrey Belyaev ET AL: "BNL-105291-2014-CP Investigation of Heat Pipe Cooling Of LI-ION Batteries", International Mechanical Engineering Congress & Exposition, 14 November 2014 (2014-11-14), XP55768357, Retrieved from the Internet: URL:https://www.bnl.gov/isd/documents/8609 5.pdf

## Description

### BACKGROUND OF THE INVENTION

### Field of the Invention

The present invention relates to a battery cooling system.

### Description of Related Art

In recent years, vehicles (hereinafter, simply referred to as "vehicles") that are powered by electric energy, such as electric vehicles and hybrid cars, have become widespread. Batteries used in this type of vehicle include a chargeable/dischargeable battery cells. However, when the battery cell is charged and discharged, heat is generated, thus a cooling system for cooling the battery cell is required.

As the battery cooling system, for example, Japanese Unexamined Patent Application, First Publication No. 2014-60088 discloses a configuration in which a battery cell placed in a container immersed in a coolant circulated by a pump. Further examples can be found for instance in Bambang Ariantara at Al: "Performance of Flat Plate Loop Heat Pipe for Thermal Management of Lithium-Ion Battery in Electric Vehicle Application", Applied Thermal Engineering, 1 April 2016. Other examples can be found in US 2009/208829 A1 or US 2015/194714 A.

### SUMMARY OF THE INVENTION

In the battery cooling system of Japanese Unexamined Patent Application, First Publication No. 2014-60088, it is necessary to circulate a large amount of coolant in order to cool the battery cell. As a result, the size of a cooling system including a circulation path and a pump is bulky and the resulting system is complicated. In this case, leakage of the coolant and manufacturing cost of the battery cooling system are critical issues.

The present invention is made in consideration of the above-described circumstances, with an objective thereof to provide a battery cooling system capable of reducing the size of the coolant circulating device, making the battery cooling system more reliable and simplified.

The essential technical features of the present invention are explicitly defined in the wording of independent claim 1 presently on file. Additional technical features of the invention are explicitly defined in the wording of dependent claim 2 on file.

In order to achieve the objective, according to a first aspect of the present invention, a battery cooling system for cooling an in-vehicle battery for supplying electric energy to a vehicle is provided. The battery cooling system includes: a cold plate which includes an inlet, a flow path, and an outlet of a coolant; a heat transfer plate which includes at least one contact portion which is in contact with the in-vehicle battery; and a plurality of heat pipes which transfer heat between the cold plate and the contact portion.

According to the battery cooling system of this aspect, heat which is received by the heat transfer plate from the in-vehicle battery is transferred to the cold plate via the heat pipes. According to this configuration, for example, even when the cold plate is not disposed on the entire surface of a heat generation portion of the in-vehicle battery, it is possible to evenly cool the heat generation portion, and thus, it is possible to decrease the size of the cold plate. Therefore, the size of the coolant circulating device decreases making the device more simplified, and thus, preventing occurrences of leakage of coolant and reducing manufacturing costs as compared to traditional cold plated based cooling system.

In addition, the cold plate and the contact portion may be arranged in an X direction, and each of the heat pipes may extend in the X direction, and the heat pipes may be arranged at intervals in a Y direction orthogonal to the X direction in a plain view.

In this case, the heat can be efficiently transferred in the X direction from the heat transfer plate to the cold plate using the heat pipes. In addition, the plurality of heat pipes are arranged at intervals in the Y direction, and thereby reducing non-uniformity in a temperature of the in-vehicle battery in the Y direction.

Moreover, the heat transfer plate may include a plurality of grooved portions and a plurality of claw portions protruding from each edge of the grooved portions toward inside of the grooved portions, and the heat pipes may be positioned in the grooved portions.

In this case, the heat pipes are positioned in the grooved portions, and thus, it is possible to increase contact areas between the heat pipes and the heat transfer plate. In this manner, heat can be efficiently transferred from the heat transfer plate to the heat pipes. In addition, the heat pipes can be fixed inside the grooved portions by the claw portions, and thus, for example, compared to a case where the heat pipes and the heat transfer plate are fixed to each other by soldering or the like, it is possible to more easily manufacture the battery cooling system.

According to the aspects of the present invention, it is possible to provide the battery cooling system capable of reducing the size of the coolant circulating device, making battery cooling system more reliable and simplified.

### BRIEF DESCRIPTION OF THE DRAWINGS

FIG. 1 is a perspective view of an in-vehicle battery and a battery cooling system of a first embodiment.
FIG. 2 is a plan view of the battery cooling system of the first embodiment.
FIG. 3A is a sectional view taken along line A-A in the battery cooling system of FIG. 2.
FIG. 3B is a sectional view taken along line B-B in the battery cooling system of FIG. 2.
FIG. 4 is a plan view of a battery cooling system of a second embodiment.
FIG. 5 is a plan view of a battery cooling system according to a modification example.

### DETAILED DESCRIPTION OF THE INVENTION

### (First Embodiment)

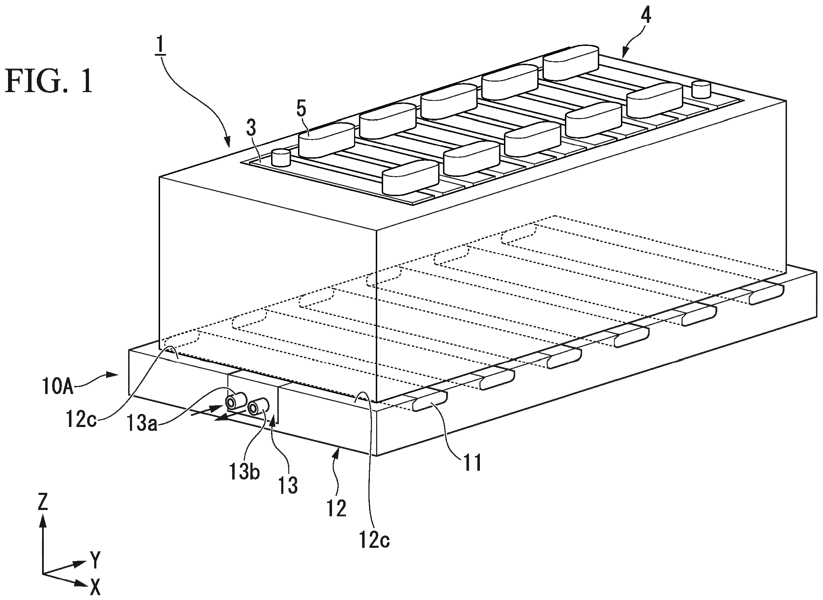

Hereinafter, a configuration of a battery cooling system 10A according to a first embodiment will be described with reference to FIGS. 1 to 3B.

Here, in the present embodiment, positional relationships of respective configurations will be described by setting an XYZ orthogonal coordinate system. Hereinafter, a left-right direction is referred to as an X direction, a front-back direction is referred to as a Y direction, and a down-up direction is referred to a Z direction.

An in-vehicle battery 1 includes a plurality of battery cells 3 that supply an electric energy to a vehicle and a rectangular housing 4 in which the plurality of battery cells 3 are accommodated.

For battery cells 3, lithium ion based cells can be used.

For example, the housing 4 could be made by aluminum die casting, and is formed in a box shape in which an upper portion thereof is opened. In addition, the housing 4 may be formed by combining stainless steel plates. In addition, in the present embodiment, the housing 4 is formed in a box shape in which the upper and bottom portion thereof is open. However, the shape of the housing 4 may be appropriately changed.

The plurality of battery cells 3 are electrically connected to each other in series or parallel, depending on required voltage needs for system, by a plurality of connectors 5. The plurality of battery cells 3 supply electric energy to a motor or the like of the vehicle, and can be charged by external electric supply or regenerative energy from vehicle. When the battery cells 3 are charged and discharged, the battery cells 3 may generate heat. The battery cooling system 10A is a system which comes into contact with a bottom surface of the in-vehicle battery 1 and helps to transfer and dissipate heat of the battery cells 3.

The entire battery cooling system 10A is formed in a plate shape that extends in the X and Y directions. The battery cooling system 10A includes a plurality of heat pipes 11, a heat transfer plate 12, and a cold plate 13.

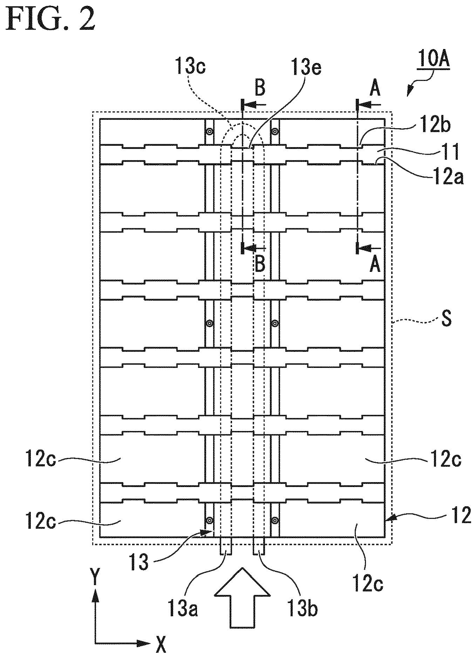

The heat transfer plate 12 is formed in a rectangular plate shape that is longer in the Y direction than in the X direction. An upper surface of the heat transfer plate 12 comes into contact with the bottom surface of the in-vehicle battery 1 via electrically insulating layer (not shown in FIGS. 1 to 3B). Hereinafter, the upper surface of the heat transfer plate 12 being in contact with the bottom surface of the in-vehicle battery 1 refers to as a contact portion 12c. The heat transfer plate 12 includes at least one contact portion 12c. As shown in FIG. 2, in this embodiment, a plurality of contact portions 12c are arranged at intervals in the X and Y directions. The heat transfer plate 12 holds the heat pipes 11 and plays a role of transferring the heat of the battery cells 3 to the heat pipes 11 through body conduction. As the heat transfer plate 12, a metal plate such as aluminum can be used, or vapor chamber with internal working fluid for convection heat transfer can be used.

A recessed portion extending in the Y direction is provided at the center portion in the X direction of the heat transfer plate 12. The cold plate 13 is positioned in the recessed portion.

The cold plate 13 is formed in a rectangular plate shape which is longer in the Y direction than in the X direction, and is positioned between the adjacent contact portions 12c of the heat transfer plate 12 in the X direction. That is, the cold plate 13 and the contact portions 12c are arranged in the X direction and are next to each other in the X direction.

The cold plate 13 includes an inlet 13a, an outlet 13b, and a flow path 13c for a coolant. The cold plate 13 is mainly formed from metal such as aluminum and the flow path 13c is provided inside the cold plate 13. The inlet 13a and the outlet 13b are connected to each other through the flow path 13c.

The inlet 13a and the outlet 13b are provided on a front surface of the cold plate 13.

The flow path 13c includes an outgoing path through which the coolant flows rearward and a return or incoming path through which the coolant flows towards exit. The coolant flows from the inlet 13a into the cold plate 13 by a pump (not shown) or the like, passes through the flow path 13c, and flows out from the outlet 13b. While the coolant flows through the flow path 13c, the temperature of the coolant is increased by heat received from the heat pipes 11. In addition, in FIG. 2, the outward path and the return path of the flow path 13c are linearly formed. However, the outward path and the return path may meander in order to efficiently transfer heat from the cold plate 13 to the coolant.

Each of plurality of heat pipes 11 extends in the X direction and are arranged at intervals in the Y direction. In a plan view shown in FIG. 2, each heat pipe 11 is positioned across the plurality of contact portions 12c of the heat transfer plate 12 and the cold plate 13. Each heat pipe 11 uses appropriate working fluid and metal container configuration. The heat pipe 11 has an evaporating portion and a condensing portion. In the evaporating portion, the working fluid that receives the heat from in-vehicle battery 1 is evaporated. In the condensing portion, the evaporated working fluid is cooled so as to condense it back to liquid. In the example of FIG. 2, in each heat pipe 11, a center portion (a portion in the vicinity of the cold plate 13) in the X direction is the condensing portion, and other portions are the evaporating portions. In this configuration, the heat pipes 11 transfer heat between the cold plate 13 and the contact portions 12c.

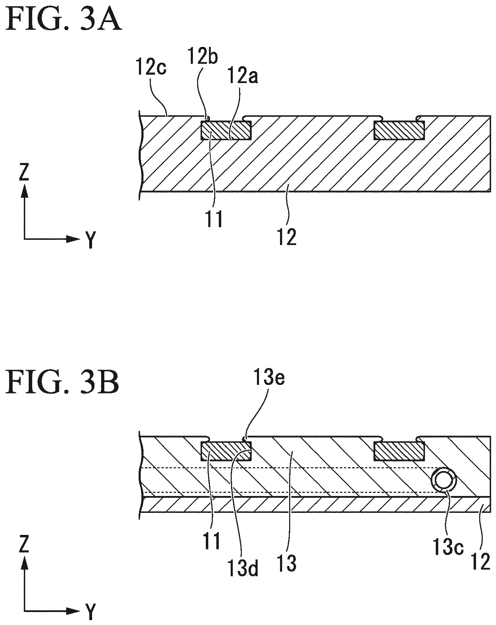

As shown in FIGS. 2 and 3A, a plurality of grooved portions 12a extending in the X direction are formed on the heat transfer plate 12. The plurality of grooved portions 12a are positioned between the contact portions 12c, and are arranged at certain intervals in the Y direction. The heat pipes 11 are fitted into the grooved portions 12a. Each grooved portion 12a is recessed inwards from the contact portions 12c of the heat transfer plate 12. Claw portions 12b that protrude from each edge of the grooved portions 12a toward inside of the grooved portions 12a are formed on the heat transfer plate 12. Each claw portion 12b on each edge protrudes towards an opposite edge of the grooved portion 12a. For example, in a case where a material of the heat transfer plate 12 is a metal such as aluminum, after accommodating the heat pipe 11 in the grooved portion 12a, the claw portions 12b can be locked by deforming each edge of the grooved portions 12a with a tool or the like. In this case, it is possible to fix the heat pipes 11 to the heat transfer plate 12 by the claw portions 12b without using soldering or brazing. In addition, the heat pipes 11 are accommodated in the grooved portions 12a, thereby increasing the contact areas between the heat transfer plate 12 and the heat pipes 11. This makes it possible to efficiently transfer heat from the heat transfer plate 12 to the heat pipes 11.

As shown in FIGS. 2 and 3B, a plurality of grooved portions 13d extending in the X direction are formed on the cold plate 13. The plurality of grooved portions 13d are arranged at certain intervals in the Y direction. The heat pipes 11 are fitted into the grooved portions 13d. Each grooved portion 13d is recessed inwards from an upper surface of the cold plate 13. Claw portions 13e which protrude from each edge of the grooved portions 13d toward inside of the grooved portions 13d are formed on the cold plate 13. Each claw portion 13e on each edge protrudes toward an opposite edge of the grooved portion 13d. For example, in a case where a material of the cold plate 13 is a metal such as aluminum, after accommodating the heat pipe 11 in the grooved portion 13d, the claw portions 13e can be locked by deforming the each edge of the grooved portions 13d with a tool or the like. It is possible to fix the heat pipes 11 to the cold plate 13 by the claw portions 13e without using soldering or brazing. In addition, the heat pipes 11 are accommodated in the grooved portions 13d, and thus, contact areas between the cold plate 13 and the heat pipes 11 increase, thereby efficiently transferring the heat from the heat pipes 11 to the cold plate 13.

Next, operation and effect of the battery cooling system 10A, having the above-described configuration, will be described.

In the in-vehicle battery 1, a portion directly over the cold plate 13 is directly cooled by the cold plate 13. The coolant flows continuously through the cold plate 13, and thus, cooling capacity of cold plate 13 is high. However, in order to cause the cold plate 13 to contact an entire bottom surface (battery placement region S) of the in-vehicle battery 1, it is necessary to increase a size of the entire cold plate 13. Particularly, in recent years, the size of the in-vehicle battery 1 has been increased in order to increase a traveling distance of the vehicle. If the size of the cold plate 13 increases according to the size of the in-vehicle battery 1, a size of a pump which pumps the coolant and coolant amount will significantly increase, and the coolant is likely to leak from the inlet 13a, the outlet 13b, and the flow path 13c. The battery cooling system 10A is mounted on the vehicle, and thus, there is a great demand for decreasing the size of the pump and reducing the possibility of the leakage.

Accordingly, in the present embodiment, as shown in FIG. 2, not only the cold plate 13 but also the heat pipes 11 and the heat transfer plate 12 are positioned in the battery placement region S. According to this configuration, it is possible to decrease the size and the weight of the cold plate 13.

The bottom surface of the in-vehicle battery 1 is in contact with the contact portions 12c of the heat transfer plate 12, and thus, the heat of the battery cells 3 is transferred from the contact portions 12c to the heat transfer plate 12. In the heat transfer plate 12, the heat is transferred by body conduction. The heat pipes 11 are fitted into the grooved portions 12a of the heat transfer plate 12, and thus, the heat of the in-vehicle battery 1 is transferred to the heat pipes 11 via the heat transfer plate 12. The working fluid in the heat pipes 11 are evaporated by the heat of the in-vehicle battery 1 in the evaporating portions and flows to the condensing portions. The working fluid in vapor phase transfer heat to the cold plate 13 by condensation in the condensing portion. The condensed liquid working fluid returns to the evaporating portions by capillary effect of wick structure. Accordingly, the working fluid in the heat pipes 11 continuously transfers the heat from the evaporating portions (a portion in the vicinity of the contact portions 12c of the heat transfer plate 12) to the condensing portions (a portion in the vicinity of the cold plate 13). According to this operation, even when the cold plate 13 is present in only a part of the battery placement region S, it is possible to evenly cool the bottom surface of the in-vehicle battery 1.

As described above, the battery cooling system 10A of the present embodiment includes the heat transfer plate 12 which includes the contact portions 12c which are in contact with the in-vehicle battery 1, and the heat pipes 11 which transfer heat between the cold plate 13 and the contact portions 12c. According to this configuration, the in-vehicle battery 1 can be evenly cooled using cold plate with reduced size and weight.

In addition, the heat pipes 11 are fitted into the grooved portions 12a and 13d of the heat transfer plate 12 and the cold plate 13, and thus, the heat can be efficiently transferred from the heat transfer plate 12 to the heat pipes 11 and then from the heat pipes 11 to the cold plate 13. In addition, the heat pipes 11 are fixed to the grooved portions 12a and 13d by the claw portions 12b and 13e, and thus, compared to an example case where the heat pipes 11 are fixed to the heat transfer plate 12 or the cold plate 13 by soldering or the like, it is possible to manufacture the battery cooling system 10A with relative ease and lower cost.

Moreover, the cold plate 13 and the plurality of contact portions 12c are arranged in the X direction, and each of the heat pipes 11 extends in the X direction, and the heat pipes 11 are arranged at intervals in the Y direction. According to this configuration, unevenness in a temperature of the in-vehicle battery 1 in the Y direction can be reduced while the heat is efficiently transferred in the X direction from the contact portions 12c to the cold plate 13 via the heat pipes 11.

### (Second Embodiment)

Next, a second embodiment according to the present invention will be described, for which the basic configuration is similar to that of the first embodiment. Accordingly, the same reference numerals are assigned to the similar configurations, descriptions thereof are omitted, and only points of difference will be described.

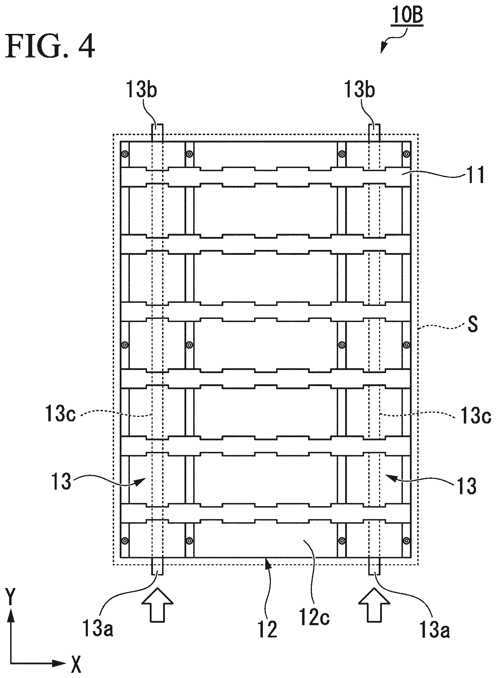

As shown in FIG. 4, a battery cooling system 10B of the present embodiment includes a plurality of cold plates 13 which are arranged in the X direction and the heat transfer plate 12 which is positioned between the cold plates 13.

The inlet 13a of each cold plate 13 is present on the front side and the outlet 13b thereof is positioned on the back side. In addition, in FIG. 4, each flow path 13c is linearly formed. However, the flow path 13c can be meandering form from the inlet 13a to the outlet 13b. The cold plate 13 can also be machined and inbuilt inside the heat transfer plate 12.

In the present embodiment, in each heat pipe 11, the center portion in the X direction is the evaporating portion for the working fluid, and both end portions in the X direction are condensing portions for the working fluid. According to this placement, the operation and effect similar to those of the first embodiment can be obtained.

In addition, a technical scope of the present invention is not limited to the above-described embodiment, and various modifications can be applied to the present invention within a scope which does not depart from the scope of the present invention.

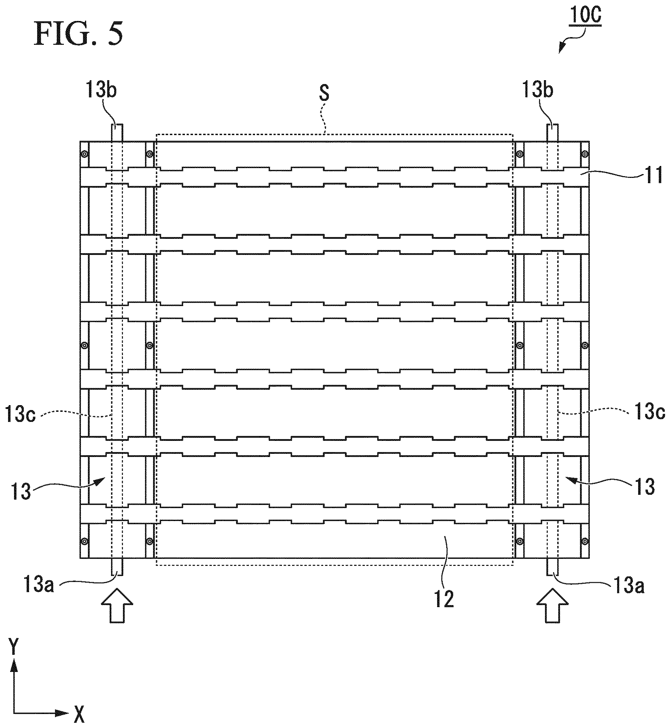

For example, in the above-described embodiment, the upper surface of the entire battery cooling system is the battery placement region S. However, as shown in FIG. 5, a part of the upper surface of the battery cooling system may be the battery placement region S. In the battery cooling system 10C shown in FIG. 5, approximately the entire region of the upper surface of the heat transfer plate 12 is the battery placement region S and the cold plates 13 are disposed outside the battery placement region S.

Moreover, in the above-described embodiment, the heat pipes 11 are fixed to the heat transfer plate 12 or the cold plate 13 by the claw portions 12b or the claw portions 13e. However, the fixing method is not limited to this. For example, the heat pipes 11 may be fixed to the heat transfer plate 12 or the cold plate 13 by soldering or the like.

While preferred embodiments of the invention have been described and illustrated above, it should be understood that these are examples of the invention and are not to be considered as limiting. Additions, omissions, substitutions, and other modifications can be made without departing from the scope of the present invention as explicitly defined in the wordings of the claims on file.

### DESCRIPTION OF THE REFFERENCE SYMBOLS

1...in-vehicle battery, 10A, 10B, 10C...battery cooling system, 11...heat pipe, 12...heat transfer plate, 12a...grooved portion, 12b...claw portion, 12c...contact portion, 13...cold plate, 13a...inlet, 13b...outlet, 13c...flow path, X...X direction, Y... Y direction

## Claims

1. A battery cooling system (10A, 10B, 10C) for cooling an in-vehicle battery (1) for supplying electric energy to a vehicle, the battery cooling system being formed in a plate shape that extends in XY plane, the battery cooling system (10A, 10B, 10C) comprising:
a cold plate (13) which includes an inlet (13a), a flow path (13c), and an outlet (13b) of a coolant and configured to flow the coolant by a pump through the inlet, the flow path, and the outlet to transfer heat;
wherein the flow path is provided inside the cold plate (13) and the inlet and the outlet are provided on a front surface of the cold plate (13),
a heat transfer plate (12) which includes a plurality of contact portions (12c) which are configured to be in contact with the bottom surface of the in-vehicle battery (1) via electrically insulating layer,
wherein the contact portion (12c) are arranged at intervals in the X and Y direction
wherein the heat transfer plate (12) is formed in a rectangular plate shape that is longer in Y direction than in the X direction; and
a plurality of heat pipes (11) which transfer heat between the cold plate (13 and the contact portion (12c),
wherein the cold plate (13) is positioned in a recessed portion extending in the Y direction at the center portion in the X direction of the heat transfer plate (12),
wherein each heat pipe uses working fluid and metal container configuration,
wherein a portion of each heat pipe (11) in the vicinity of the cold plate (13) is condensing portion and other portions of the heat pipes are evaporating portions,
wherein a plurality of grooved portions (12a) extending in the X direction are formed on the heat transfer plate (12), the plurality of grooved portions (12a) being positioned between the contact portions (12c) and arranged at intervals in the Y direction,
wherein the heat pipes (11) are fitted in the grooved portions (12a), each grooved portions (12a) being recessed inwards from the contact portions (12c),
wherein claw portions (12b) that protrude from each edge of the grooved portions (12a) toward inside of the grooved portions (12a) are formed on the heat transfer plate (12).

2. The battery cooling system according to claim 1, wherein the cold plate and the contact portions are arranged in an X direction.

## Patentansprüche

1. Batteriekühlsystem (10A, 10B, 10C) zum Kühlen einer fahrzeuginternen Batterie (1) zum Versorgen eines Fahrzeugs mit elektrischer Energie, wobei das Batteriekühlsystem in einer Plattenform gebildet ist, welche sich in einer XY-Ebene erstreckt, wobei das Batteriekühlsystem (10A, 10B, 10C) umfasst:
eine Kühlplatte (13), welche einen Einlass (13a), einen Strömungspfad (13c) und einen Auslass (13b) eines Kühlmittels umfasst und dazu eingerichtet ist, das Kühlmittel durch eine Pumpe durch den Einlass, den Strömungspfad und den Auslass strömen zu lassen, um Wärme zu übertragen;
wobei der Strömungspfad innerhalb der Kühlplatte (13) bereitgestellt ist und der Einlass und der Auslass an einer vorderen Fläche der Kühlplatte (13) bereitgestellt sind,
eine Wärmeübertragungsplatte (12), welche eine Mehrzahl von Kontaktabschnitten (12c) umfasst, welche dazu eingerichtet sind, über eine elektrisch isolierende Schicht mit der unteren Fläche der fahrzeuginternen Batterie (1) in Kontakt zu sein,
wobei die Kontaktabschnitte (12c) in der X- und der Y-Richtung in Abständen angeordnet sind,
wobei die Wärmeübertragungsplatte (12) in einer rechteckigen Plattenform gebildet ist, welche in der Y-Richtung länger als in der X-Richtung ist; und
eine Mehrzahl von Wärmeleitungen (11), welche Wärme zwischen der Kühlplatte (13) und dem Kontaktabschnitt (12c) übertragen,
wobei die Kühlplatte (13) an dem Mittelabschnitt in der X-Richtung der Wärmeübertragungsplatte (12) in einem vertieften Abschnitt positioniert ist, welcher sich in der Y-Richtung erstreckt,
wobei jede Wärmeleitung ein Arbeitsfluid und eine Metallbehälterkonfiguration verwendet,
wobei ein Abschnitt jeder Wärmeleitung (11) in der Nähe der Kühlplatte (13) ein Kondensationsabschnitt ist und andere Abschnitte der Wärmeleitungen Verdampfungsabschnitte sind,
wobei eine Mehrzahl von Nutabschnitten (12a), welche sich in der X-Richtung erstrecken, an der Wärmeübertragungsplatte (12) gebildet ist, wobei die Mehrzahl von Nutabschnitten (12a) zwischen den Kontaktabschnitten (12c) positioniert ist und in der Y-Richtung in Abständen angeordnet ist,
wobei die Wärmeleitungen (11) in die Nutabschnitte (12a) eingepasst sind, wobei jeder Nutabschnitt (12a) von den Kontaktabschnitten (12c) nach innen vertieft ist,
wobei Klauenabschnitte (12b), welche von jedem Rand der Nutabschnitte (12a) in Richtung eines Inneren der Nutabschnitte (12a) vorstehen, an der Wärmeübertragungsplatte (12) gebildet sind.

2. Batteriekühlsystem nach Anspruch 1, wobei die Kühlplatte und die Kontaktabschnitte in einer X-Richtung angeordnet sind.

## Revendications

1. Système de refroidissement de batterie (10A, 10B, 10C) pour refroidir une batterie embarquée (1) destinée à apporter de l'énergie électrique à un véhicule, le système de refroidissement de batterie étant formé selon une forme de plaque qui s'étend dans un plan XY, le système de refroidissement de batterie (10A, 10B, 10C) comprenant :
une plaque froide (13) qui comporte une entrée (13a), un chemin d'écoulement (13c) et une sortie (13b) d'un fluide caloporteur et configurée pour faire s'écouler le fluide caloporteur par une pompe à travers l'entrée, le chemin d'écoulement et la sortie afin de transférer de la chaleur ;
dans lequel le chemin d'écoulement est disposé à l'intérieur de la plaque froide (13) et l'entrée et la sortie sont disposées sur une surface avant de la plaque froide (13),
une plaque de transfert de chaleur (12) qui comporte une pluralité de parties de contact (12c) qui sont configurées pour être en contact avec la surface de fond de la batterie embarquée (1) via une couche électriquement isolante,
dans lequel les parties de contact (12c) sont agencées à intervalles dans les directions X et Y
dans lequel la plaque de transfert de chaleur (12) est formée selon une forme de plaque rectangulaire qui est plus longue dans la direction Y que dans la direction X ;
et
une pluralité de caloducs (11) qui transfèrent de la chaleur entre la plaque froide (13) et la partie de contact (12c),
dans lequel la plaque froide (13) est positionnée dans une partie évidée s'étendant dans la direction Y au niveau de la partie centrale dans la direction X de la plaque de transfert de chaleur (12),
dans lequel chaque caloduc utilise une configuration à fluide de travail et récipient métallique,
dans lequel une partie de chaque caloduc (11) à proximité de la plaque froide (13) est une partie de condensation et d'autres parties des caloducs sont des parties d'évaporation,
dans lequel une pluralité de parties rainurées (12a) s'étendant dans la direction X sont formées sur la plaque de transfert de chaleur (12), la pluralité de parties rainurées (12a) étant positionnées entre les parties de contact (12c) et agencées à intervalles dans la direction Y,
dans lequel les caloducs (11) sont installés dans les parties rainurées (12a), chaque partie rainurée (12a) étant évidée vers l'intérieur depuis les parties de contact (12c),
dans lequel des parties griffes (12b) qui font saillie depuis chaque bord des parties rainurées (12a) vers l'intérieur des parties rainurées (12a) sont formées sur la plaque de transfert de chaleur (12).

2. Système de refroidissement de batterie selon la revendication 1, dans lequel la plaque froide et les parties de contact sont agencées dans une direction X.
